# EUROPEAN PATENT APPLICATION

(11) **EP 3 081 541 A1**
(43) Date of publication of application: **19.10.2016**
(21) Application number: 15163319.5
(22) Date of filing: 13.04.2015
(51) Int. Cl.: C03B 19/06

(54) **METHOD FOR PRODUCING GLASS SHEETS BY THERMOPLASTIC EXTRUSION**

(71) Applicant: Saint-Gobain Glass France, 92400 Courbevoie (FR)
(72) Inventor: Hardy, Anne B., Acton, MA 01720 (US); Li, Chuanping, Shrewsbury, MA 01545 (US); Kwon, Oh-Hun, Westborough, MA 01581 (US)
(74) Representative: Pöpping, Barbara

(57) **Abstract**

The present invention is directed to a method for producing ultrathin glass sheets comprising the following steps:
(a) Preparing or providing a polymer/glass compound comprising from 30 to 80 vol% of a mineral component consisting of glass particles and optionally ceramic particles, and from 20 to 70 vol% of an organic component consisting of one or more thermoplastic polymers and one or more processing aids selected from the group consisting of surfactants, waxes, and plasticizers,
(b) Extruding the polymer/glass compound of step (a) at a temperature of between 50°C and 280 °C as a composite polymer/glass sheet,
(c) Progressively heating the resulting composite polymer/glass sheet to a temperature of between 500 °C and 1600 °C, preferably of between 500 °C and 850 °C, so as to first burn out the organic component and then sinter together the glass particles of the mineral component, thereby obtaining a glass sheet.

## Description

The present invention is drawn to a new method for producing ultrathin glass sheets by extrusion of a polymer/glass compound and sintering. It is also directed to ultrathin glass sheets obtainable by such a process.

Ultrathin glass sheets having a thickness of less than 300 µm are superior to plastic films because of the inherent properties of glass such as high scratch resistance, impermeability to gas and moisture, heat resistance and outstanding optical properties. Such ultrathin glass sheets have a variety of applications such as for example LCD substrates, LED/OLED elements, electronic paper, solid secondary batteries, solar cells, displays and screens for computers, televisions, mobile phones, ebooks, pads and new types of lighting and energy devices.

Ultrathin glass sheets are presently manufactured using the "overflow downdraw" method, also called "fusion draw" method. This method provides very thin glass sheets with pristine, smooth, flat surfaces. It requires extremely precise temperature and power control.

US 2010/0319401 discloses a method for manufacturing ultrathin glass sheets by roll-to-roll glass soot deposition and subsequent sintering of the glass soot sheet. However, in this method gaseous compounds are required as precursor chemicals for deposition of glass soot sheets, which is expensive and may not apply to many kinds of glass systems. Meanwhile, the two surfaces of the formed sheets may not be identical: one is "deposit surface" contacted to the soot-receiving surface and the other is "free surface" during deposition process. Also, only a portion of the width is sintered at a given time interval during the heating, likely resulting in crack and deformation.

The present invention is directed to an alternative process for manufacturing ultrathin glass sheets comprising thermoplastic extrusion of a glass/polymer compound, burning out the polymer component of the resulting polymer/glass sheet and sintering the glass particle compact to obtain a fully dense or slightly porous ultrathin glass sheet.

The method of the present invention is advantageous in that it allows manufacture of a variety of different ultrathin glass sheets. Different types of glasses may be used, the porosity of the resulting glass sheet may be controlled by varying the amount of the organic component of the extruded polymer/glass compound, the thickness of the final glass sheet is easily controlled by selection of a suitable extrusion die, and coextrusion of multilayer structures allows for the production of multilayered glass sheets.

The method for producing ultrathin glass sheets of the present invention comprises the following steps:
(a) Preparing or providing a polymer/glass compound comprising from 30 to 80 vol% of a mineral component consisting of glass particles and optionally ceramic particles, and from 20 to 70 vol% of an organic component consisting of one or more thermoplastic polymers and one or more processing aids selected from the group consisting of surfactants, waxes, and plasticizers,
(b) Extruding the polymer/glass compound of step (a) at a temperature of between 50 °C and 280 °C as a composite polymer/glass sheet,
(c) Progressively heating the resulting composite polymer/glass sheet to a temperature of between 500 °C and 1600°C, preferably 500 °C and 850 °C, so as to first burn out the organic component and then sinter together the glass particles of the mineral component, thereby obtaining a glass sheet.

An ultrathin glass sheet obtainable by such a method is another subject-matter of the present invention.

The polymer/glass compound comprises a mineral and an organic component. The mineral component consists of glass particles and optional ceramic particles. The amount of ceramic particles should preferably not exceed about 25 vol%. When the sintering temperature of step (c) is not high enough to sinter the ceramic particles, an excessively high amount thereof could reduce the mechanical strength of the final glass sheet. The mineral component comprises preferably less than 20 vol%, more preferably less than 10 vol% and even more preferably less than 5 vol% of ceramic particles, the complement, i.e. at least 80 % vol%, preferably at least 90 vol% and more preferably more than 95 vol%, consisting of glass particles.

In a particularly preferred embodiment, the mineral component is free of ceramic particles and consists of only glass particles.

The polymer/glass compound preferably does not comprise any mineral ingredient other than glass particles and optional ceramic particles.

Any type of glass can be used for this method e.g. silicate glass, aluminosilicate glass, borosilicate glass, fluorosilicate glass, lead glass, phosphate glass, phosphosilicate glass, sodium silicate glass, etc.

In order to achieve high optical transparent ultrathin glass sheets, alkali-free or low alkali content glass is preferably used. The low melting temperature of alkali-rich glass may indeed cause the polymer binder not be able to completely burnout and leave some residual carbon in the sintered glass sheets, resulting in coloration.

Ceramic particles may be selected for example from alumina, zirconia, silica, magnesia, ferric oxide, lime, clay, mullite, SiC, ZnO, Si₃N₄, Y₂O₃ cordierite, spinel, AlN, BN, ZrB₂.

The glass particles and ceramic particles, if any, preferably have a median particle size (D₅₀) of between 0.2 µm and 50 µm measured with laser diffraction particle size analyzer, more preferably of between 0.5 and 5 µm and even more preferably of between 0.7 and 3 µm.

The organic component is burned out during step (c), leaving a more or less porous glass ribbon or sheet which is then solidified by sintering of the glass particles at higher temperatures. The polymer/glass compound must contain a minimum of 30 vol% of mineral component (glass particles + optional ceramic particles). For lower amounts the glass/ceramic particles would not be in contact with each other and sintering would not result in a continuous ribbon of glass after sintering. The inventors have found that in order to produce a dense, non-porous glass tape after sintering, the polymer/glass compound should comprises from 60 to 80 vol%, preferably from 70 to 80 vol% of a mineral component and from 20 to 40 vol%, preferably from 20 to 30 vol% of an organic component. Lower amounts of mineral component (between 30 and 59 vol%) result in porous sintered glass sheet or glass tape.

The organic component is a blend of thermoplastic polymer and one or more processing aids. The processing aids are selected from surfactants, waxes, and plasticizers.

Surfactants are useful for facilitating dispersion of the mineral particles in the organic polymer phase. Higher glass powder load and more uniform distribution of the glass particles in the thermoplastic binder matrix can be achieved in the presence of surfactants.

The surfactants may be anionic, cationic or non-ionic surfactants.

Anionic surfactants are for example alkylbenzenesulfonates, fatty acids, lauryl sulfates, di-alkyl sulfosuccinate or lignosulfonates.

Cationic surfactants are fatty amine salts and quaternary ammoniums with one or several long alkyl type chains, often coming from natural fatty acids.

Nonionic surfactants are surfactants having a non-dissociable hydrophilic group such as alcohol, phenol, ether, ester or amide. They may contain polyethylene glycol chains. Sugar-based glucoside surfactants may also be used as non-ionic surfactants.

The organic component preferably comprises from 0.5 to 18 wt%, more preferably from 1 to 10 wt% of a surfactant.

Waxes are used in the present invention as lubricants and to increase the melting flow rate of the glass/polymer compound during extrusion step (b). The organic component preferably comprises between 5 and 35 wt%, more preferably between 10 and 25 wt% of waxes.

Plasticizers are used to reduce the brittleness of the extruded composite glass/polymer sheet. They decompose at lower temperatures than the polymer component and thereby benefit the burn-out step.

Preferred plasticizers are selected from the group consisting of polyethylene glycol and esters, preferably phthalates, adipates, trimellitates, and alkane sulfonate esters.

The organic component preferably comprises up to 15 wt%, preferably up to 10 wt% of one or more plasticizers.

The thermoplastic polymer may be selected for example from the group consisting of polyethylene, polystyrene, polypropylene, poly(lactic acid), polyurethane, poly(methyl methacrylate), polyamide, poly(benzimidazol), poly(vinyl chloride), fluoropolymers, starch, acrylonitrile-butadiene-styrene copolymers, styrene-butadiene copolymers, styrene-acrylonitrile copolymers, ethylene-vinyl acetate copolymers, poly(vinyl butyral), poly(styrene-b-isoprene-b-styrene) copolymers, poly(styrene-b-butadiene-b-styrene) (SBS) copolymers. Blends of two or more thermoplastic polymers may of course be used.

The organic component preferably comprises from 40 wt% to 80 wt%, preferably from 45 wt% to 70 wt%, of thermoplastic polymers and from 20 wt% to 60 wt%, preferably from 30 wt% to 55 wt%, of processing aids.

The glass/polymer compound may be prepared by blending the organic and mineral components in the extruder used for extruding the composite polymer/glass of step (b). It may be advantageous to prepare the glass/polymer compound in separate blending equipment and to granulate the resulting compound before introducing it in the extruder used at step (b).

The extrusion temperature is comprised between 50 °C and 280 °C, preferably between 100 °C and 190 °C. The extrusion pressure is comprised between about 700 kPa and 14 MPa.

The extruded composite polymer/glass sheet has a thickness of between 20 µm and 600 µm, preferably of between 40 µm and 500 µm and more preferably of between 50 and 400 µm. It may be directly submitted to step (c). In other word, it is neither useful nor recommended to submit the extruded sheet to any additional step such as drying.

The thermoplastic extruded composite polymer/glass sheet is strong enough for handling. It is flexible and can be rolled.

However, after the binder burnout in step (c), the "neck-connection" between glass particles has not strongly been formed yet. The strength and the flexibility are low at this stage. Caution needs to be taken at the beginning of step (c).

At laboratory scale, the inventors conducted the step (c) by firing the ultrathin glass-polymer sheets on flat alumina setters which support the sheets throughout the step (c). It can be scaled up to an industrial scale by laying the extruded sheets on refractory setters or rollers in a continuous sintering kiln, which is widely used in ceramic tile industry.

Step (c) of the method of the present invention comprises first the burn-out of the organic component, which is generally complete at about 450 °C, and then the sintering of the green glass sheet. The average heating rate throughout step (c) is preferably comprised between 0.5 and 2.0 °C/min, more preferably between 0.8 and 1.5 °C/min.

Binder burn-out is a critical step of the method of the present invention. Slow and carefully controlled heating rate is required to avoid cracking, deformation and sticking on refractory setters.

During this first phase of step (c), i.e. during the burning out of the organic component, as long as decomposition of the organic component is not complete, the heating rate should not exceed 1.5 °C/min, more preferably should not exceed 1.0 °C/min and should preferably be comprised between 0.5 and 1 °C/minute.

Once the organic component has completely disappeared, the heating rate may be increased but should again be reduced at the onset of sintering. Sintering of a glass or ceramic green body results in shrinkage of the powder compact and can be monitored by high temperature dilatometry.

The dilatometer curve represents the variation of a dimension of a sample with increasing temperature. At low temperature only thermal dilation of the green body is recorded. When a certain temperature is reached the sintering process begins and the material starts to shrink. On the dilatometer curve, or densification curve, of a powder compact the sintering domain is defined as the temperature range between the onset of shrinkage (shrinking temperature) visible on the densification curve and the inflexion point of densification curve (sintering temperature). In this temperature range comprised between the shrinking temperature and the sintering temperature of the mineral component the heating rate preferably does not exceed 1.5 °C/min, more preferably does not exceed 1.0 °C.

The method of the present invention is advantageous in that it allows manufacture of a multilayer ultra-thin glass sheet by co-extrusion, in step (b), of two or more polymer/glass compounds, resulting in a multi-layered composite polymer/glass sheet which is then submitted to step (c) in the way described above.

In a preferred embodiment, step (b) comprises co-extrusion of a first polymer/glass compound containing glass particles having a first thermal expansion coefficient, between two second polymer/glass compounds containing glass particles having a second thermal expansion coefficient, wherein the second thermal expansion coefficient is lower than the first thermal expansion coefficient.

The two outer layers are preferably thinner than the central layer. The glass powder of the central layer and the outer layers should have similar sintering temperatures. After co-sintering and cooling, the lower thermal expansion coefficient of the two outer layers results in compressive forces that increase the mechanical resistance of the final glass sheet.

### Example 1:

A polymer/glass compound was prepared by mixing the below ingredients.

| Materials | wt.% | vol.% | wt.% of organic component |
|---|---|---|---|
| Glass powder *(D₅₀ = 1 µm) | 77 | 54.9 | - |
| Polystyrene (Empera® 124N) | 9 | 16.7 | 39.1 |
| Polyethylene | 1.8 | 3.8 | 7.8 |
| Paraffin Wax | 8 | 17.1 | 34.8 |
| Stearic acid (surfactant) | 1.7 | 3.2 | 7.4 |
| Diethyl phthalate (plasticizer) | 2.5 | 4.3 | 10.9 |
| Total | 100.0 | 100.0 | |

| | | | |
|---|---|---|---|
| * SiO₂ 66.0 wt% ; Al₂O₃, 1.5 wt%, Fe₂O₃ 0.5 wt%; B₂O₃, 5.0 wt% ; Na₂O 16.0 wt% ; K₂O 0.5 wt% ; CaO 7.5 wt%, MgO 3.0 wt%, Sintering temperature : 650 °C | | | |

The organic components (except diethyl phthalate) and the glass powder were compounded in an Intelli-Torque Plasti-Corder C.W. Brabender at the speed of 60 rpm and the temperature of 160 °C for 2.5 hours. After that, the Brabender was cooled down to the temperature of 100 °C and diethyl phthalate was added into the organics-glass mixture in the Brabender. The final mixture was again blended at 100 °C for 1 hour. The compounded mixture of the polymer/glass feedstock was then extruded through Xplore MC 15cc Micro-Compounder to form a polymer/glass sheet. A DSM Xplore Film Die (with slit width 65 mm, and slit height 0.4mm) was used. By controlling the feeding rate, the temperature, the screw speed, and the pulling rate, a polymer/glass thin sheet with a controlled thickness from about 25 µm to 400 µm and the width of about 25 mm could be extruded. In this example the thickness was about 220 µm. The temperature of the extrusion machine was set at 170 °C. The screw speed was set at 50 rpm. The extruded polymer/glass sheet could be easily manipulated and rolled.

The extruded polymer/glass sheet was then laid on a flat ceramic setter and heated in a sintering oven according to the following temperature profile:
Heat from room temperature to 200 °C at 1 °C/min,
Hold at 200 °C for 60 min
Heat from 200 °C to 300 °C 1 °C/min,
Hold at 300 °C for 60 min
Heat from 300 °C to 450 °C at 1 °C/min,
Hold at 450 °C for 60 min
Heat from 450 °C to 530 °C at 2 °C/min,
Hold at 530 °C for 60 min
Heat from 530 °C to 650 °C at 1 °C/min,
Hold at 650 °C for 120 min
Free cooling

The resulting sintered sheet had a width of 22.3 mm and a thickness of about 200 µm. It could be manipulated.

### Example 2:

| Materials | wt.% | vol.% | wt.% of organic component |
|---|---|---|---|
| E glass (D₅₀ = 20µm) | 87 | 70.5 | - |
| Polystyrene (Empera® 116N) | 3.3 | 6.9 | 25.4 |
| Polyethylene (Epolene® N-10) | 3.5 | 8.3 | 27.0 |
| Licowax® E Flake | 2.1 | 5.1 | 16.1 |
| Sofracerine® 185 | 1.9 | 4.4 | 14.6 |
| Glycol Stearate (surfactant) | 1.5 | 3.2 | 11.5 |
| BYK®-P 4102 (surfactant) | 0.7 | 1.5 | 5.4 |
| Total | 100.0 | 100.0 | |

All the organic components and the glass powder were compounded in an Intelli-Torque Plasti-Corder C.W. Brabender at the speed of 60 rpm and the temperature of 170 °C for 3 hours. The mixture of the polymer/glass feedstock was then extruded through an Xplore MC 15cc Micro-Compounder to form a polymer/glass sheet with a thickness about 220 um and the width of about 25 mm. The zone temperature of the extrusion machine was set at 170 °C. The speed was set at 50 rpm. The extruded polymer/glass sheet could be easily manipulated and rolled.

The extruded polymer/glass sheet was then laid on a flat ceramic setter and heated in a sintering oven according to the following temperature profile: Heat from room temperature to 200 °C at 1 °C/min,
Hold at 200 °C for 60 min
Heat from 200 °C to 300 °C 1 °C/min,
Hold at 300 °C for 60 min
Heat from 300 °C to 500 °C at 1 °C/min,
Hold at 500 °C for 60 min
Heat from 500 °C to 710 °C at 2 °C/min,
Hold at 710 °C for 60 min
Heat from 710 °C to 800 °C at 1 °C/min,
Hold at 800 °C for 60 min
Heat from 800 °C to 815 °C at 1C/min,
Hold at 815 °C for 120 min
Free cooling

The resulting sheet had a thickness of about 200 µm. Its light transmission (380 - 780 nm) was about 60 %. Closed pores were visible under microscope. There were no connected pores.

### Example 3 :

| Materials | wt.% | vol.% | wt.% of organic component |
|---|---|---|---|
| Glass powder** (∼1µm) | 80.00 | 58.2 | - |
| Ethylene-vinyl acetate copolymer (EVA) | 11.85 | 25.0 | 59.25 |
| Sofracerine® 185 (Wax) | 3.82 | 7.9 | 19.1 |
| Nopcowax® 22 DS (Wax) | 2.04 | 4.5 | 10.2 |
| Glycol Stearate (surfactant) | 2.29 | 4.4 | 11.45 |
| Total | 100.00 | 100.0 | |

| | | | |
|---|---|---|---|
| ** Al₂O₃ 8.53 wt%, BaO 51.28 wt%, SiO₂ 40.19 wt% | | | |

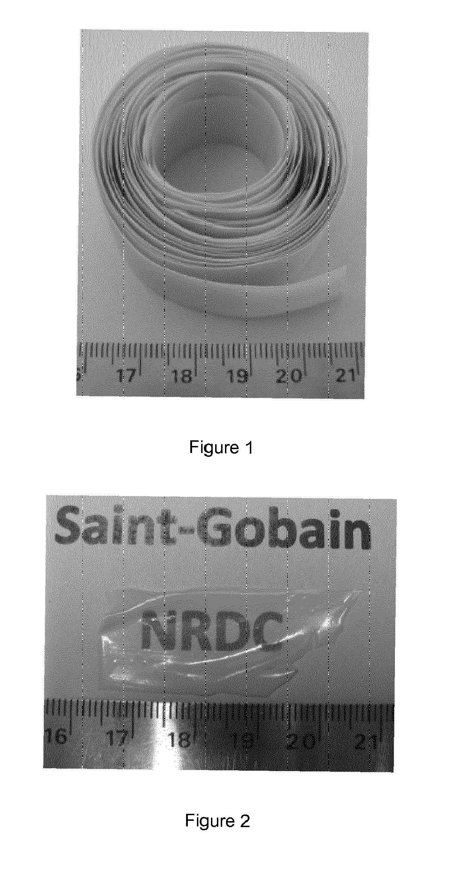

The organic components and the glass powder were compounded in an Intelli-Torque Plasti-Corder C.W. Brabender at the speed of 60 rpm and the temperature of 180 °C for 3 hours. The mixture of the polymer/glass feedstock was then extruded through an Xplore MC 15cc Micro-Compounder to form a polymer/glass sheet with a thickness of about 220 µm and a width of about 25 mm. The temperature of the extrusion machine was set at 180 °C. The speed was set at 50 rpm. A photograph of the extruded polymer/glass sheet is shown in figure 1. It could be easily manipulated and rolled.

The extruded polymer/glass sheet was then laid on a flat ceramic setter and heated in a sintering oven according to the following temperature profile: Heat from room temperature to 200 °C at 1 °C/min,
Hold at 200 °C for 60 min
Heat from 200 °C to 300 °C 1 °C/min,
Hold at 300 °C for 60 min
Heat from 300 °C to 520 °C at 1 °C/min,
Hold at 520 °C for 60 min
Heat from 520 °C to 790 °C at 5 °C/min,
Hold at 790 °C for 60 min
Heat from 790 °C to 820 °C at 1 °C/min,
Hold at 820 °C for 120 min
Free cooling

Figure 2 shows a photograph of the resulting transparent ultra-thin glass tape obtained after firing.

### Example 4:

| Materials | wt.% | vol.% | wt.% of organic component |
|---|---|---|---|
| E glass (∼1µm) | 83.85 | 65.1 | - |
| Ethylene-vinyl acetate copolymer (EVA) | 9.38 | 21.1 | 58.1 |
| Struktol® V-Wax E | 2.50 | 5.4 | 15.5 |
| Sofracerine 185 (wax) | 0.80 | 1.8 | 4.9 |
| Glycol Stearate (surfactant) | 1.28 | 2.6 | 7.9 |
| Eastman TXIB® (plasticizer) | 2.20 | 4.0 | 13.6 |
| Total | 100.00 | 100.0 | |

The organic components (except diethyl phthalate) and the glass powder were compounded in an Intelli-Torque Plasti-Corder C.W. Brabender at the speed of 60 rpm and the temperature of 190 °C for 2.5 hours. After that, the Brabender was cooled down to the temperature of 100 °C, and diethyl phthalate was added to the mixture still in the Brabender. The final mixture was kneaded again at 100 °C for 1 hour.

The compounded mixture of the polymer/glass feedstock was then extruded through an Xplore MC 15cc Micro-Compounder to form a polymer/glass sheet with a thickness about 220 µm and a width of about 25 mm. The temperature of the extrusion machine was set at 190 °C. The speed was set at 50 rpm. The extruded polymer/glass sheet could be easily manipulated and rolled.

The heating profile was identical to Example 2.

## Claims

1. A method for producing ultrathin glass sheets comprising the following steps:
(a) Preparing or providing a polymer/glass compound comprising from 30 to 80 vol% of a mineral component consisting of glass particles and optionally ceramic particles, and from 20 to 70 vol% of an organic component consisting of one or more thermoplastic polymers and one or more processing aids selected from the group consisting of surfactants, waxes, and plasticizers,
(b) Extruding the polymer/glass compound of step (a) at a temperature of between 50 °C and 280 °C as a composite polymer/glass sheet,
(c) Progressively heating the resulting composite polymer/glass sheet to a temperature of between 500 °C and 1600 °C, preferably of between 500 °C and 850 °C, so as to first burn out the organic component and then sinter together the glass particles of the mineral component, thereby obtaining a glass sheet.

2. The method according to claim 1, wherein the composite polymer/glass sheet of step (b) has a thickness of between 20 µm and 600 µm, preferably of between 40 µm and 500 µm and more preferably of between 50 and 400 µm.

3. The method according to claim 1 or 2, wherein the composite polymer/glass sheet is submitted, in step (c), to heating at an average heating rate of between 0.5 and 2.0 °C/min, preferably of between 0.8 and 1.5 °C/min.

4. The method according to claim 3, wherein the heating rate does not exceed 1.5 °C/min, more preferably does not exceed 1.0 °C/min during the burning out of the organic component and in the temperature range comprised between the shrinking temperature and the sintering temperature of the mineral component.

5. The method according to any of the preceding claims, wherein the mineral component consists of glass particles and optionally ceramic particles having a median particle size (D₅₀) of between 0.2 µm and 10 µm.

6. The method according to any of the preceding claims, wherein the mineral component comprises less than 20 vol%, preferably less than 10 vol% and more preferably less than 5 vol% of ceramic particles, and at least 80 vol%, preferably at least 90 vol% and more preferably more than 95 vol% of glass particles.

7. The method according to any of the preceding claims, wherein the polymer/glass compound comprises from 60 to 80 vol%, preferably from 70 to 80 vol% of a mineral component and from 20 to 40 vol%, preferably from 20 to 30 vol% of an organic component.

8. The method according to any of the preceding claims, wherein the organic component comprises from 40 wt% to 80 wt%, preferably from 45 to 70 wt%, of thermoplastic polymers and from 20 wt% to 60 wt%, preferably from 30 wt% to 55 wt%, of processing aids.

9. The method according to any of the preceding claims, wherein the thermoplastic polymer is selected from the group consisting of polyethylene, polystyrene, polypropylene, poly(lactic acid), polyurethane, poly(methyl methacrylate), polyamide, poly(benzimidazol), poly(vinyl chloride), fluoropolymers, starch, acrylonitrile-butadiene-styrene copolymers, styrene-butadiene copolymers, styrene-acrylonitrile copolymers, ethylene-vinyl acetate copolymers, poly(vinyl butyral), poly(styrene-b-isoprene-b-styrene) copolymers, poly(styrene-b-butadiene-b-styrene) (SBS) copolymers.

10. The method according to any of the preceding claims, wherein the plasticizers are selected from the group consisting of polyethylene glycol and esters, preferably phthalates, adipates, trimellitates, and alkane sulfonate esters.

11. The method according to any of the preceding claims, wherein step (b) comprises co-extrusion of two or more polymer/glass compounds, resulting in a multi-layered composite polymer/glass tape.

12. The method according to claim 11, wherein step (b) comprises co-extrusion of a first polymer/glass compound containing glass particles having a first thermal expansion coefficient, between two second polymer/glass compounds containing glass particles having a second thermal expansion coefficient, wherein the second thermal expansion coefficient is lower than the first thermal expansion coefficient.

13. Ultrathin glass sheet obtainable by a method according to any of the preceding claims.
